Europäisches Patentamt

European Patent Office

Office européen des brevets

(19)

(11) Publication number: **0 164 172**
A2

(12)

# EUROPEAN PATENT APPLICATION

(21) Application number: **85200840.8**

(22) Date of filing: **23.05.85**

(51) Int. Cl.⁴: **H 02 K 15/08**

(30) Priority: **05.06.84 IT 2207484 U**

(43) Date of publication of application: **11.12.85**
Bulletin 85/50

(84) Designated Contracting States: **CH DE FR GB IT LI NL SE**

(71) Applicant: **AXIS S.p.A., I-50028 Tavarnelle val di pesa (Florence) (IT)**

(72) Inventor: **Luciani, Sabatino, Via di Querceto 169, I-50019 Sesto Fiorentino Florence (IT)**

(74) Representative: **De Carli, Erberto et al, ING. BARZANO' & ZANARDO MILANO S.p.A. Via Borgonuovo, 10, I-20121 Milano (IT)**

(54) Take-up device for maintaining constant wire tension in machines for forming electric motor windings.

(57) The present invention relates to a take-up device for maintaining constant wire tension in machines for forming electric motor windings comprising a support element rotating about a central axis and carrying a plurality of idle deviator members for wire guiding purposes distributed radially and circumferentially on the support, and fixed deviator members lateral to the support and aligned diametrically with respect thereto.

- 1 -

Machines for forming electric motor windings, for example stator windings, are known in which a needle driven with to-and-fro motion combined with oscillating rotary motion about its axis unwinds a copper wire from a reel in order to deposit it in the armature cavity. The needle moves through the stator, mounted on a suitable template, so as to form at least one winding (single-point needle), and preferably both windings (needle with two opposite points).

In machines of this type, the problem arises of keeping the wire tension continuously constant in order to prevent the formation of slack and disordered turns in the windings.

Because of the fact that the wire slides in the needle axially to it, ie in the same direction as its rectilinear reciprocating motion, during its return stroke the needle slides on the wire which has been deposited to form the winding.

In contrast, during the needle feed stroke the wire has to be fed in the length required for the winding plus the length required by the movement of the needle itself.

In other words, the length of wire to be fed is the algebraic sum of the length withdrawn for forming the winding, and the length withdrawn by virtue of the reciprocating movement of the needle, which can be considered to change sign periodically so that during its return stroke the needle does not withdraw wire but instead renders it.

In order to compensate for the length of wire rendered by the needle during its return stroke, it has been proposed to associate with a wire braking device a former for cyclically forming a wire loop downstream of said braking device, to thus absorb the quantity of wire rendered during the return stroke of the needle, so that the wire is always under a condition of withdrawal, leading to smaller instantaneous speed and tension variations.

An example of this device is described in USA patent 3,251,559.

In this patent the loop former is constituted by an eccentric cooperating member which is moved through a circular trajectory intercepted diametrically by a portion of the wire trajectory defined by deviator members. The cooperating member obviously moves in suitable phase with respect to the needle.

The loop formed in this manner causes a false lengthening of the wire trajectory when the needle retracts, whereas it causes a shortening of the trajectory when the needle advances and the loop is nullified.

The effect is qualitatively satisfactory but not so quantitatively, because the relationship which determines the increase and reduction in the length of the wire trajectory by virtue of the loop formation does not reproduce the cyclic withdrawal variation caused by the needle movement.

There therefore remain wire feed speed variations which cause it to accelerate with consequent instantaneous pulling which is incompatible with proper operation, especially in the case of the extremely fast winding machines currently required commerically.

It should also be noted that the length of the wire instantaneously withdrawn by the needle can vary in accordance with complicated relationships, as a function of the needle motion pattern and of the shape of the winding and the surfaces on which the wire is deposited in order to be guided into the cavities which receive the winding.

In order to solve this problem, wire tensioning devices have already been proposed, positioned between the coil and needle and comprising friction pulleys mounted on elastic arms.

A further drawback of known devices is the need to vary the needle stroke and to provide for the availability of stator support templates of different lengths, which are changed according to the height of the lamination pack of the stator under production. This is because of the considerable variations in the tension of the wire moved by the needle, and length variations at the formation of wire loops, which have to be controlled by suitable template profiles.

The overall object of the present invention is to obviate the aforesaid drawbacks by providing a device able to maintain the tension of the wire unwound by the moving needle substantially constant, so as to obtain windings free from loose turns, and thus very compact, with a greater number of turns for equal cavity cross-sections, and thus a greater motor power.

A further object of the invention is to provide a wire tensioning device, in particular for machines for forming stator windings, by which only one needle stroke need be used for different heights of the stator lamination pack.

These objects are attained according to the invention by a take-up device for maintaining constant wire tension in machines for forming electric motor windings, characterised by comprising a support element caused to rotate about a central axis and carrying a plurality of idle deviator members for wire guiding purposes distributed radially and circumferentially on the support, and fixed deviator members lateral to the support and aligned diametrically with respect thereto.

Preferably said support element is a disc, on one face of which, and within an approximately 180° sector thereof, said idle deviator members are mounted in a manner adjustable in position, both radially and angularly.

The structural and operational characteristics of the invention and its advantages over the known art will be more apparent from an examination of the description given hereinafter with reference to the accompanying diagrammatic drawings which shown one embodiment of the device constructed in accordance with the teachings of the invention. In the drawings:

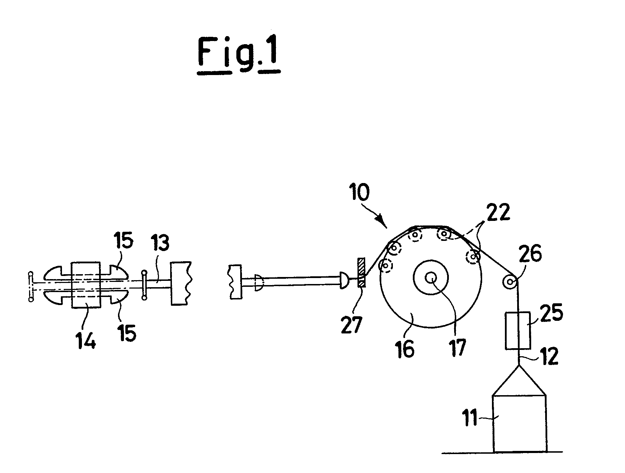

Figure 1 is a schematic general view showing a device according to the invention;

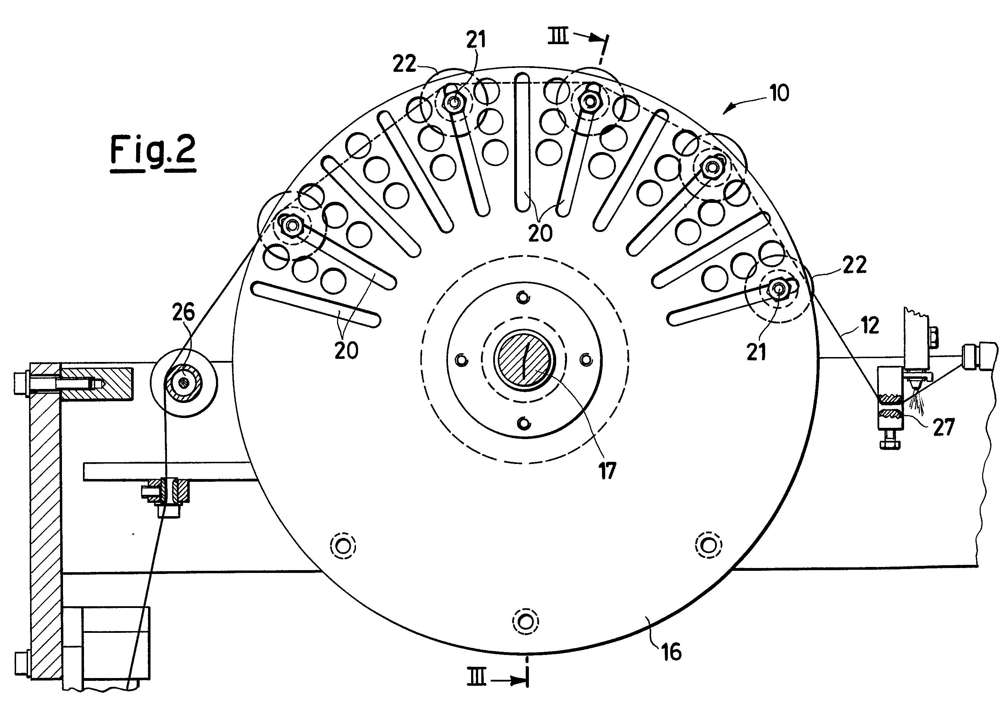

Figure 2 is an elevation of a detail of Figure 1; and

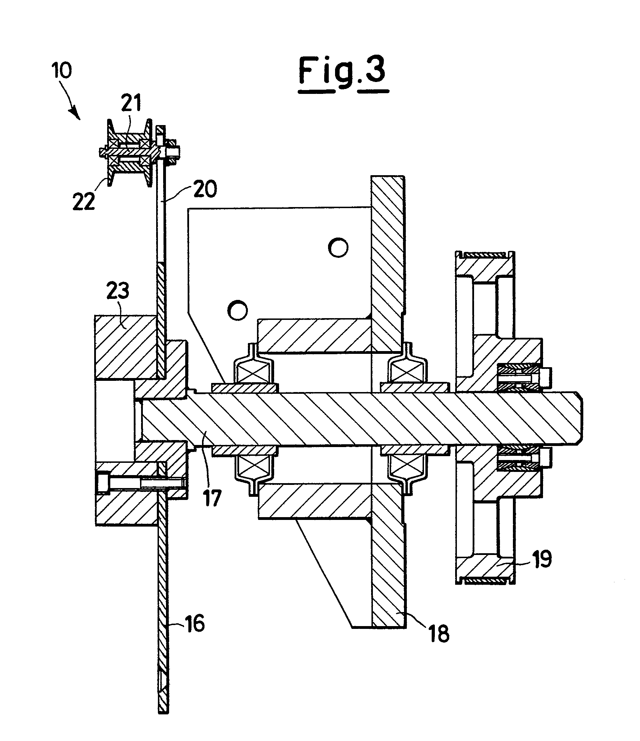

Figure 3 is a section on the line III-III of Figure 2.

In the drawings, the reference numeral 10 indicates overall the wire tensioning device according to the invention disposed between a reel 11 for unwinding the wire 12 and a needle 13 which with the wire 12 forms a winding, for example on a stator 14 carried by a pair of templates 15.

Said needle 13 is driven in known manner with rectilinear reciprocating motion of predetermined stroke, and with a simultaneous reciprocating rotation about its axis. The needle generally comprises two diametrically opposing wire outlets, so as to simultaneously form the two stator windings.

The wire tension compensating device 10 is formed structurally from a disc 16 fixed to one end of a central shaft 17 which is made to rotate on a support 18 by means of a driven pulley 19.

Said disc 16 comprises, along an arc of nearly 180°, a plurality of radial slots 20 to which there are secured, in a position-adjustable manner, pivots 21 carrying idle deviator members or pulleys 22 for guiding the wire.

A hub 23 projects from the centre of the disc 16.

The wire reaches the device 10 from a reel indicated diagrammatically at 11, by way of a wire braking device indicated by 25 and of known type.

Deviator members 26, 27 are provided downstream and upstream of the disc 16.

The linkages which move the disc 16 and needle 13 in phase with each other are not shown.  These linkages are such that for each complete path of travel of the the needle in the two directions, the disc undergoes one revolution.

More particularly, during the return stroke of the needle, when it slides on the wire in the opposite direction to its feed direction, the pulleys are in their upper position, ie they form a loop which absorbs a length of wire in order to compensate for the false length of wire which is fed during winding by virtue of the sliding of the needle in the opposite direction to the wire feed direction.

When the rotation of the disc causes the pulleys to abandon the wire, this becomes deposited on the hub 23, to attain the minimum-length trajectory arrangement without comprising an excessive free portion which would be subject to vibration.

The formation of a take-up loop by means of a plurality of pulleys enables the correct configuration to be obtained at every instant for exactly and very satisfactorily compensating for the shorter length of wire which has to be fed to the needle by virtue of its return movement along the wire.

This length absorbed by the formation of the loop can be varied by variously disposing the pulleys circumferentially and diametrically on the disc, so as to be able to wind a stator of different height while maintaining the needle stroke constant, by taking account of the relationship governing its reciprocating motion and the other variables which can arise from the configuration of the templates which traditionally support that part of the motor on which the windings are formed, and which comprise lead-in surfaces for guiding the wire into the cavities.

During operation, either a single disc structure can be used on which the pulleys are disposed in a predetermined position for each winding formed, or a series of discs can be available, on each of which pulleys have been mounted for defining the most convenient loop for a given winding, in accordance with theoretical calculation and experimentation.

0164172

- 1 -

CLAIMS

1. A take-up device for maintaining constant wire tension in machines for forming electric motor windings, characterised by comprising a support element caused to rotate about a central axis and carrying a plurality of idle deviator members for wire guiding purposes distributed radially and circumferentially on the support, and fixed deviator members lateral to the support and aligned diametrically with respect thereto.

2. A device as claimed in claim 1, characterised in that said support element is a disc, on one face of which, and within an approximately 180° sector thereof, said idle deviator members are mounted in a manner adjustable in position, both radially and angularly.

3. A device as claimed in claim 2, characterised in that said disc centrally comprises a projecting hub on which the wire rests when it is abandoned by the idle deviator members.

# Fig.1

Fig.2

0164172

# Fig.3